# EUROPEAN PATENT SPECIFICATION

(11) **EP 2 612 427 B1**
(45) Date of publication and mention of the grant of the patent: **25.04.2018**
(21) Application number: 11773017.6
(22) Date of filing: 31.08.2011
(51) Int. Cl.: H02M 1/44, H02M 1/14

(54) **CIRCUIT ARRANGEMENT AND METHOD FOR REDUCING COMMON-MODE NOISE IN A SWITCHED-MODE POWER SUPPLY, AND A SWITCHED-MODE POWER SUPPLY**
SCHALTUNGSANORDNUNG UND VERFAHREN ZUR GLEICHTAKTRAUSCHMINIMIERUNG BEI EINEM SCHALTNETZTEIL UND SCHALTNETZTEIL
MONTAGE DE CIRCUITS ET PROCÉDÉ PERMETTANT D'ATTÉNUER LE BRUIT EN MODE COMMUN DANS UN BLOC D'ALIMENTATION À DÉCOUPAGE, ET BLOC D'ALIMENTATION À DÉCOUPAGE

(30) Priority: 03.09.2010 FI 20105926
(43) Date of publication of application: 10.07.2013
(73) Proprietor: Salcomp Oyj, 24101 Salo (FI)
(72) Inventor: SUORSA, Ilkka, FI-02630 Espoo (FI)
(74) Representative: Berggren Oy, Turku
(86) International application number: PCT/FI2011/050756
(87) International publication number: WO 2012/028787

(56) References cited:
- US-A1- 2004 032 753
- US-A1- 2009 212 754
- US-B2- 7 109 836

## Description

### TECHNICAL FIELD OF THE INVENTION

The present invention relates to a switched-mode power supply according to the preamble of the appended independent claim.

### BACKGROUND OF THE INVENTION

Switched-mode power supplies (SMPS) are widely used in various technical applications, mainly because of their high efficiency and compact size. High efficiency is a result of adopting a switching technique in which high-frequency pulsed electrical current is fed to a transformer. The drawback of this technique is that both conducted and radiated electromagnetic interference (EMI) is generated by the SMPS.

A conventional switched-mode power supply comprises a primary side and a secondary side separated from each other by a transformer. The transformer has a primary and a secondary winding wound on a common core element. A pulsed electrical current fed to the primary winding creates a cyclically changing magnetic field in and around the core element, from which energy is discharged to the secondary winding and eventually to a load. Due to the changing voltages in the windings of the transformer there are capacitive currents generated between the windings and also between the windings and other parts of the electrical device, e.g. the core element. These capacitive currents are detected as common-mode (CM) noise and can be a significant source of electromagnetic interference. The capacitive currents between the primary winding and the secondary winding can be the most significant source of emissions in a low power switched-mode power supply.

Various techniques to reduce common-mode noise in a switched-mode power supply are known. A conventional technique is to use a combination of a common-mode inductor and a so-called Y-capacitor. The Y-capacitor is connected between the primary and the secondary ground. The Y-capacitor short circuits the emission currents generated by the transformer, while the common-mode inductor increases the impedance of the circuit in order to minimise the generated currents. The problem is that a common-mode inductor is an expensive and large component, which also generates losses. A large-valued Y-capacitor has a problem of leakage currents from power supply mains. Furthermore, the Y-capacitor reduces the impedance for other emissions to pass through it.

Document US 7109836 B2 discloses a technique in which the capacitive displacement current between the primary winding and the secondary winding is reduced by balancing the relative electrostatic fields generated between these windings. The relative electrostatic fields are balanced by providing a balancing portion either to the primary winding or the secondary winding.

Some of the generated currents can also be cancelled by using additional windings which generate opposite directional currents to reduce the emissions generated by the primary and secondary windings. Because the voltage waveforms are different in shape, the currents are not similar and therefore the differences cannot be properly cancelled out. Particularly when the output power is large, the parasitic cancellation technique looses much of its effectiveness.

Document US 2004/032753 A1 discloses an apparatus for reducing common-mode noise in a switching power converter. The apparatus comprises a counter-acting winding providing a counter-acting voltage across voltage dividing elements, which act together as a passive divider for adjusting the counter-acting voltage. The adjusted counter-acting voltage reduces common-mode current flowing through a series element by reducing the voltage across it.

Also many types of conducting foil constructions are used in EMI control. These have similar drawbacks as the transformer structures having only coils.

A problem associated with the above-described techniques is that they are inefficient in reducing common-mode noise and can even itself generate significant capacitive currents in the switched-mode power supply.

### OBJECTIVES OF THE INVENTION

It is the main objective of the present invention to reduce or even eliminate prior art problems presented above.

It is an objective of the present invention to reduce common-mode noise in a switched-mode power supply. In more detail, it is an objective of the invention to reduce common-mode voltage and its variation between the primary winding and the secondary winding of the transformer.

It is also an objective of the present invention to provide a switched-mode power supply with minimal common-mode noise.

In order to realise the above-mentioned objectives, the switched-mode power supply according to the invention is characterised by what is presented in the characterising part of the appended independent claim. Advantageous embodiments of the invention are described in the dependent claims.

### DESCRIPTION OF THE INVENTION

A typical switched-mode power supply according to the invention comprises a primary side, a secondary side, a transformer between the primary side and the secondary side, said transformer comprising a primary winding coupled to the primary side and a secondary winding coupled to the secondary side, and a first capacitor adapted to capacitively couple the primary winding and the secondary winding. A typical switched-mode power supply according to the invention further comprises an auxiliary winding and an impedance circuit, said auxiliary winding and said impedance circuit being coupled between the primary winding and the first capacitor, the impedance circuit comprising a first impedance component and a second impedance component, the second impedance component being coupled in series with the auxiliary winding, and the first impedance component being coupled in parallel with the series-connected second impedance component and auxiliary winding. In a typical switched-mode power supply according to the invention at least one of the impedance components is adjustable. A typical switched-mode power supply according to the invention further comprises a second capacitor coupled in series with the first capacitor and a control unit adapted to measure the voltage over the second capacitor and to control the impedance of at least one of the impedance components based on the measured voltage.

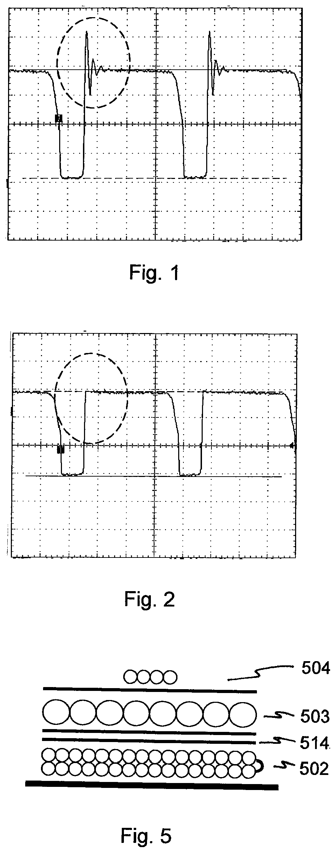

The present invention provides a solution to a problem which arises when the voltages of the primary winding and the secondary winding are used to negate each other's generated capacitive common-mode currents. Because the primary and secondary voltages have different waveforms, capacitive currents cannot be fully negated, and in many cases not even sufficiently negated. This problem arises, for example, when a Y-capacitor is connected between the primary and secondary windings in order to reduce the common-mode noise, and the impedance from the load to the ground is small. The situation gets even worse when a power supply has to provide more power to a load. The main difference between the primary and secondary voltage waveforms derives from an overshoot voltage which is generated when the primary stops to conduct. This overshoot voltage can be seen as a ringing waveform in the primary voltage (see fig. 1). The secondary voltage does however not include such a ringing waveform (see fig. 2).

An idea of the present invention is to use voltages having similar waveforms to negate each other. This is achieved by connecting an auxiliary winding in connection with an impedance circuit between the primary winding and the first capacitor. Depending on the location of the auxiliary winding with respect to the primary winding and the secondary winding on a common core element, the auxiliary voltage waveform has different shapes. However, in some specific winding constructions the overshoot voltage has barely effect on the auxiliary voltage. Because of this the common-mode voltage and its variation in a switched-mode power supply can be efficiently reduced by using the circuit arrangement according to the invention.

Another advantage of the present invention is that a common-mode inductor is not necessarily needed in a switched-mode power supply, and the first capacitor (Y-capacitor) can have a low capacitance value.

The impedance components connected to the auxiliary winding form a voltage division for the voltage shift of the common-mode voltage between the primary and the secondary. An important task of the first impedance component is to minimise the impedance of the auxiliary winding in higher frequencies. Preferably, the impedance values of the impedance components are selected small in order to use the first capacitor also as a radiated emissions reduction element.

In a switched-mode power supply according to the invention at least one of the impedance components is adjustable. In other words, the impedance of at least one impedance component can be changed. This enables that the emissions can be minimised for each switched-mode power supply separately by changing the impedance value(s).

The second capacitor is either connected between the first capacitor and the secondary winding or between the first capacitor and the impedance circuit.

The second capacitor is used to reduce the emission variations which occur mainly due to the capacitance value variation of the first capacitor. The series capacitance value of the first and second capacitors can be selected to have low variation and thus the total primary to secondary capacitance variation is reduced. The second capacitor can be adjustable.

According to an embodiment of the invention the control unit is adapted to measure the voltage over the second capacitor at regular time intervals. The voltage can be measured, for example, at 1-10 ms intervals. Alternatively, the voltage can be measured every time the switched-mode power supply is turned on.

According to an embodiment of the invention the impedance component comprises at least one of the following: a resistor, a coil, a capacitor or a transistor.

According to a preferred embodiment of the invention the impedance components are resistors. In this case resonances are not produced by the impedance components and the auxiliary winding connected to them. Preferably, the impedance values of the resistors are in the same category compared to the impedance of the primary-secondary connecting capacitance in a frequency range of 30 to 80 MHz. This limits the use of high value resistances for the resistors. On the other hand the losses in the resistors will be large if their resistances are too small.

According to an embodiment of the invention the auxiliary winding and the impedance circuit are coupled to the primary winding directly or via at least one capacitor, or in otherwise high-frequency sense stable potential in the primary side. Connection between the two coils can be, for example, through a capacitor or capacitors.

According to an embodiment of the invention the secondary winding is arranged to encircle the primary winding, and the auxiliary winding is arranged to encircle the secondary winding. An advantage of wounding the auxiliary winding on the secondary winding is that the waveform of the auxiliary winding follows better the waveform of the secondary winding. It is also possible to wound the auxiliary winding between the primary and secondary windings. The windings are wound on a common core element.

According to an embodiment of the invention the number of turns of the auxiliary winding is less than 5. Preferably the number of turns of the auxiliary winding is 1 or 2, in order to keep the parasitic capacitive currents between the auxiliary winding and the secondary winding as small as possible.

A typical circuit arrangement for reducing common-mode noise in a switched-mode power supply, the circuit arrangement being coupled between a primary winding and a secondary winding of a transformer, comprises a first capacitor adapted to capacitively couple the primary winding and the secondary winding. A typical circuit arrangement further comprises an auxiliary winding and an impedance circuit, said auxiliary winding and said impedance circuit being coupled between the primary winding and the first capacitor.

A typical method for reducing common-mode noise in a switched-mode power supply comprises using a first capacitor for capacitively coupling a primary winding and a secondary winding of a transformer. A typical method further comprises using an auxiliary winding and an impedance circuit between the primary winding and the first capacitor.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

### BRIEF DESCRIPTION OF THE DRAWINGS

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.
- Fig. 1: shows an exemplary primary voltage waveform of a switched-mode power supply,
- fig. 2: shows an exemplary secondary voltage waveform of a switched-mode power supply,
- fig. 3: is a schematic diagram of a switched-mode power supply according to a first embodiment of the invention,
- fig. 4: is a schematic diagram of a switched-mode power supply according to a second embodiment of the invention, and
- fig. 5: shows a section view of a transformer construction according to an embodiment of the invention.

### DETAILED DESCRIPTION OF THE PREFERRED EMBODIMENTS OF THE INVENTION

Examples of typical primary and secondary voltage waveforms are shown in figs. 1 and 2, respectively. The primary voltage waveform includes an overshoot which is generated when the primary stops to conduct. The overshoot is depicted with a circle of dashed line in fig. 1. The secondary voltage waveform does not include such an overshoot as can be seen in fig. 2.

Fig. 3 is a schematic diagram of a flyback type switched-mode power supply according to a first embodiment of the invention. The flyback power supply 300 comprises a primary filtering capacitor 301, a primary switch 305, a transformer having a primary winding 302, a secondary winding 303 and an auxiliary winding 304, and a rectifier diode 306. The windings 302, 303 and 304 are inductively coupled through the transformer. The auxiliary winding 304 is connected to a stable potential in the primary side, in this case to the primary filtering capacitor 301, which in turn is connected to the primary winding 302. The power supply 300 comprises a bridge rectifier 310 which is used for rectifying the AC voltage from mains 311.

The power supply 300 further comprises a first impedance component 307, a second impedance component 308 and a first capacitor 309. The impedance components 307 and 308 form a voltage division of the auxiliary winding 304 voltage to supply the first capacitor 309.

Since the first capacitor 309 connects the primary and the secondary together, for safety reasons it usually has to be a Y-capacitor type. The capacitor element 309 may consist of two physical capacitors in order to reduce the variation in a typical Y-capacitor. Since the voltage waveform of the auxiliary winding 304 can be similar to the voltage waveform of the secondary winding 303, the set-up can be used very effectively to cancel the secondary generated capacitive emission currents. The impedances of the impedance components 307 and 308 have to be selected so that the voltage shapes are not distorted by the time constants generated by the inductances and capacitances involved. In addition, since the same first capacitor 309 is also used to reduce the radiated emissions, the impedance values of the impedance components 307 and 308 cannot be too big. If the impedance components 307 and 308 are resistor components, their impedance is useful to have a similar size as the impedance of the first capacitor 309 at the most troublesome radiated emission frequency. Typically this frequency range is between 30 MHz and 100 MHz. Since the auxiliary winding voltage is cancelling the capacitive currents generated by the secondary winding, it has the same polarity as the secondary winding 303. The auxiliary winding 304 cannot have many turns, because the impedance values of the impedance components 307 and 308 are small. If the impedance components 307 and 308 are resistors, the losses in them are big if there are many turns in the auxiliary winding 304.

The impedance components 307 and 308 can be adjustable. For example, their impedance values can be selected in the production phase to minimise the effect of variation generated by different components involved.

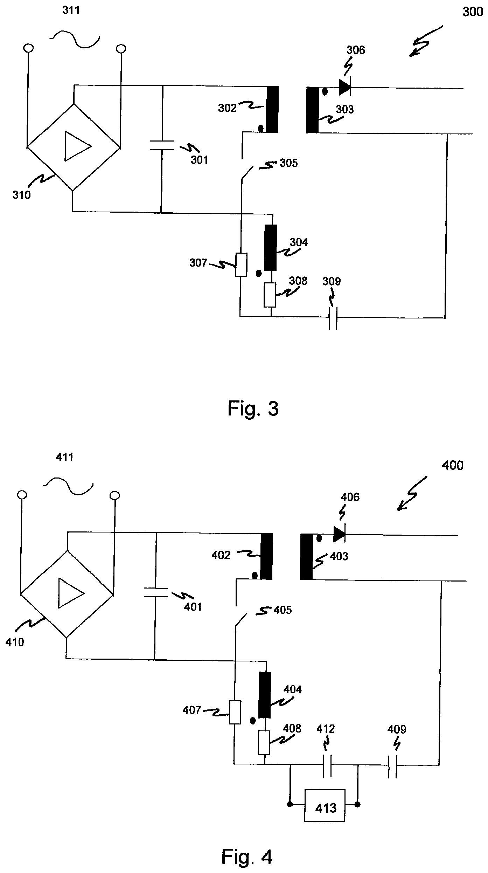

Fig. 4 is a schematic diagram of a flyback type switched-mode power supply according to a second embodiment of the invention. The flyback power supply 400 comprises a primary filtering capacitor 401, a primary switch 405, a transformer having a primary winding 402, a secondary winding 403 and an auxiliary winding 404, and a rectifier diode 406. The power supply 400 also comprises a bridge rectifier 410 which is used for rectifying the AC voltage from mains 411. The power supply 400 comprises a first impedance component 407, a second impedance component 408, a first capacitor 409 and a second capacitor 412. The first capacitor 409 is the safety component, while the second capacitor 412 is used for measurement of the emissions.

The common-mode voltage between the primary and secondary grounds determines significant part of the emissions. It can be measured and partially calculated based on the measured voltage over the second capacitor 412. The measurement and the calculation are performed by a control unit 413 which is also adapted to change the impedance values of the impedance components 407 and 408 in order to minimise the transformer generated emissions. This way the system can actively control the emissions. The practical implementation of the control unit 413 can be of many types. The control unit 413 can comprise, for example, an integrated circuit. The measurement of the voltage over the second capacitor 412 is preferred to be done when the bridge rectifier 410 does not conduct. This way the common-mode circuit has higher impedance and the voltage can be measured with less error.

In order to make the auxiliary voltage waveform similar to the secondary voltage waveform a specific transformer coil arrangement is needed. Particularly, it is preferable if the overshoot in the primary voltage (see fig. 1) is not included in the auxiliary voltage waveform. This can be achieved if the leakage field does not generate voltage to the auxiliary winding. Fig. 5 shows a section view of a transformer construction with which the auxiliary voltage waveform follows the secondary voltage waveform. A primary winding 502, a secondary winding 503 and an auxiliary winding 504 are wound around a common core. The secondary winding 503 encircles the primary winding 502, and the auxiliary winding 504 encircles the secondary winding 503. The transformer comprises insulation layers 514 between the windings.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A switched-mode power supply (300, 400), comprising:
- a primary side,
- a secondary side,
- a transformer between the primary side and the secondary side, said transformer comprising a primary winding (302, 402) coupled to the primary side and a secondary winding (303, 403) coupled to the secondary side,
- a first capacitor (309, 409) adapted to capacitively couple the primary winding and the secondary winding, and
- an auxiliary winding (304, 404) and an impedance circuit, said auxiliary winding and said impedance circuit being coupled between the primary winding and the first capacitor, the impedance circuit comprising a first impedance component (307, 407) and a second impedance component (308, 408), the second impedance component being coupled in series with the auxiliary winding (304, 404), and the first impedance component being coupled in parallel with the series-connected second impedance component and auxiliary winding;
**characterised in that** at least one of the impedance components (307, 308, 407, 408) is adjustable, and that the switched-mode power supply further comprises a second capacitor (412) coupled in series with the first capacitor (409) and a control unit (413) adapted to measure the voltage over the second capacitor (412) and to control the impedance of at least one of the impedance components (407, 408) based on the measured voltage.

2. The switched-mode power supply according to claim 1, **characterised in that** the control unit (413) is adapted to measure the voltage over the second capacitor (412) at regular time intervals.

3. The switched-mode power supply according to claim 1 or 2, **characterised in that** the second capacitor (412) is adjustable.

4. The switched-mode power supply according to any of the preceding claims, **characterised in that** the impedance component (307, 308, 407, 408) comprises at least one of the following: a resistor, a coil, a capacitor or a transistor.

5. The switched-mode power supply according to any of the preceding claims, **characterised in that** the auxiliary winding (304, 404) and the impedance circuit are coupled to the primary winding (302, 402) directly or via at least one capacitor.

6. The switched-mode power supply according to any of the preceding claims, **characterised in that** the secondary winding (303, 403, 503) is arranged to encircle the primary winding (302, 402, 502), and the auxiliary winding (304, 404, 504) is arranged to encircle the secondary winding.

7. The switched-mode power supply according to claim 6, **characterised in that** the number of turns of the auxiliary winding (304, 404, 504) is less than 5.

## Patentansprüche

1. Schaltnetzteil (300, 400), umfassend:
- eine Primärseite,
- eine Sekundärseite,
- einen Transformator zwischen der Primärseite und der Sekundärseite, wobei der Transformator eine Primärwicklung (302, 402), die mit der Primärseite gekoppelt ist, und eine Sekundärwicklung (303, 403), die mit der Sekundärseite gekoppelt ist, umfasst,
- einen ersten Kondensator (309, 409), der eingerichtet ist, die Primärwicklung und die Sekundärwicklung kapazitiv zu koppeln und
- eine Hilfswicklung (304, 404) und eine Impedanzschaltung, wobei die Hilfswicklung und die Impedanzschaltung zwischen die Primärwicklung und den ersten Kondensator gekoppelt sind, wobei die Impedanzschaltung eine erste Impedanzkomponente (307, 407) und eine zweite Impedanzkomponente (308, 408) umfasst, wobei die zweite Impedanzkomponente in Reihe mit der Hilfswicklung (304, 404) gekoppelt ist und die erste Impedanzkomponente parallel zu der in Reihe verbundenen zweiten Impedanzkomponente und Hilfswicklung gekoppelt ist;
**dadurch gekennzeichnet, dass** mindestens eine der Impedanzkomponenten (307, 308, 407, 408) einstellbar ist und dass das Schaltnetzteil ferner einen zweiten Kondensator (412), der in Reihe mit dem ersten Kondensator (409) gekoppelt ist, und eine Steuereinheit (413), die eingerichtet ist, die Spannung über dem zweiten Kondensator (412) zu messen und die Impedanz von mindestens einer der Impedanzkomponenten (407, 408) basierend auf der gemessenen Spannung zu steuern, umfasst.

2. Schaltnetzteil nach Anspruch 1, **dadurch gekennzeichnet, dass** die Steuereinheit (413) eingerichtet ist, die Spannung über dem zweiten Kondensator (412) in regelmäßigen Zeitintervallen zu messen.

3. Schaltnetzteil nach Anspruch 1 oder 2, **dadurch gekennzeichnet, dass** der zweite Kondensator (412) einstellbar ist.

4. Schaltnetzteil nach einem der vorhergehenden Ansprüche, **dadurch gekennzeichnet, dass** die Impedanzkomponente (307, 308, 407, 408) mindestens Eines der Folgenden umfasst: einen Widerstand, eine Spule, einen Kondensator oder einen Transistor.

5. Schaltnetzteil nach einem der vorhergehenden Ansprüche, **dadurch gekennzeichnet, dass** die Hilfswicklung (304, 404) und die Impedanzschaltung direkt oder mittels mindestens eines Kondensators mit der Primärwicklung (302, 402) gekoppelt sind.

6. Schaltnetzteil nach einem der vorhergehenden Ansprüche, **dadurch gekennzeichnet, dass** die Sekundärwicklung (303, 403, 503) angeordnet ist, die Primärwicklung (302, 402, 502) zu umgeben und die Hilfswicklung (304 404, 504) angeordnet ist, die Sekundärwicklung zu umgeben.

7. Schaltnetzteil nach Anspruch 6, **dadurch gekennzeichnet, dass** die Anzahl der Windungen der Hilfswicklung (304, 404, 504) kleiner als 5 ist.

## Revendications

1. Source d'alimentation à mode commuté (300, 400), comprenant :
- un côté primaire,
- un côté secondaire,
- un transformateur entre le côté primaire et le côté secondaire, ledit transformateur comprenant un enroulement primaire (302, 402) couplé au côté primaire et un enroulement secondaire (303, 403) couplé au côté secondaire,
- un premier condensateur (309, 409) adapté pour coupler de manière capacitive l'enroulement primaire et l'enroulement secondaire, et
- un enroulement auxiliaire (304, 404) et un circuit d'impédance, ledit enroulement auxiliaire et ledit circuit d'impédance étant couplés entre l'enroulement primaire et le premier condensateur, le circuit d'impédance comprenant un premier composant d'impédance (307, 407) et un second composant d'impédance (308, 408), le second composant d'impédance étant couplé en série avec l'enroulement auxiliaire (304, 404), et le premier composant d'impédance étant couplé en parallèle avec le second composant d'impédance et l'enroulement auxiliaire connectés en série ;
**caractérisé en ce qu'**au moins l'un des composants d'impédance (307, 308, 407, 408) est réglable, et **en ce que** la source d'alimentation à mode commuté comprend en outre un second condensateur (412) couplé en série avec le premier condensateur (409) et une unité de commande (413) adaptée pour mesurer la tension aux bornes du second condensateur (412) et commander l'impédance d'au moins l'un des composants d'impédance (407, 408) d'après la tension mesurée.

2. Source d'alimentation à mode commuté selon la revendication 1, **caractérisée en ce que** l'unité de commande (413) est adaptée pour mesurer la tension aux bornes du second condensateur (412) à intervalles de temps réguliers.

3. Source d'alimentation à mode commuté selon la revendication 1 ou 2, **caractérisée en ce que** le second condensateur (412) est réglable.

4. Source d'alimentation à mode commuté selon l'une quelconque des revendications précédentes, **caractérisée en ce que** le composant d'impédance (307, 308, 407, 408) comprend au moins l'un des éléments suivants : un résistor, une bobine, un condensateur ou un transistor.

5. Source d'alimentation à mode commuté selon l'une quelconque des revendications précédentes, **caractérisée en ce que** l'enroulement auxiliaire (304, 404) et le circuit d'impédance sont couplés à l'enroulement primaire (302, 402) directement ou par le biais d'au moins un condensateur.

6. Source d'alimentation à mode commuté selon l'une quelconque des revendications précédentes, **caractérisée en ce que** l'enroulement secondaire (303, 403, 503) est agencé pour entourer l'enroulement primaire (302, 402, 502) et l'enroulement auxiliaire (304, 404, 504) est agencé pour entourer l'enroulement secondaire.

7. Source d'alimentation à mode commuté selon la revendication 6, **caractérisée en ce que** le nombre de spires de l'enroulement auxiliaire (304, 404, 504) est de moins de 5.
